# NOUVEAU FASCICULE DE BREVET EUROPEEN

(11) **EP 2 248 621 B2**
(45) Date de publication et mention de la décision concernant l'opposition: **28.11.2018**
(45) Mention de la délivrance du brevet: 19.09.2012
(21) Numéro de dépôt: 10305398.9
(22) Date de dépôt: 16.04.2010
(51) Int. Cl.: B23K 9/067, B23K 9/073, B23K 9/09, B23K 9/173

(54) **Procédé d'amorçage d'une opération de soudure à l'arc avec une étape de retard au passage en mode pulsé**
Verfahren zum Anfangen eines Lichtbogenschweissens mit Verspätung des Eintrittes in der gepulsten Phase
Process of starting an arc welding operation with delay step for entering in the pulse modus

(30) Priorité: 07.05.2009 FR 0953033
(43) Date de publication de la demande: 10.11.2010
(73) Titulaire: AIR LIQUIDE WELDING FRANCE, 75007 Paris (FR)
(72) Inventeur: Chevalier, Richard, 95300 Pontoise (FR); Plottier, Gérard, 95460 Ezanville (FR)
(74) Mandataire: Knauer, Joachim

(56) Documents cités:
- EP-A2- 1 354 659
- EP-A2- 1 681 123
- DE-A1- 2 728 980
- JP-A- 60 231 573
- JP-A- 2005 066 615
- US-B1- 6 207 928
- BEDIENUNGSANLEITUNG TRANSSYNERGIE 4000/5000

## Description

L'invention concerne un procédé d'amorçage de soudure à l'arc de pièces métalliques conformément au préambule de la revendication 1 (voir, par example, US 6 207 928).

On appelle soudage MIG ou MAG, pour respectivement « Metal Inert Gas » (soudure de métal sous gaz inerte) et « Metal Active Gas » (soudure de métal sous gaz actif), les techniques de soudage ou de soudo-brasage, à l'arc électrique avec électrode fusible et gaz de protection, notamment de tôles, revêtues ou non. Ces techniques de soudage sont également connues sous l'appellation générale « GMAW » pour « Gas Metal Arc Welding » (pour soudure à l'arc de métal sous gaz).

Lors de la mise en oeuvre de ces procédés MIG ou MAG, la chaleur que dégage l'arc électrique provoque la fusion de l'extrémité du métal d'apport, c'est-à-dire du fil fusible, et du métal de base, c'est-à-dire du métal ou alliage métallique constitutif des pièces à souder. Un gaz ou un mélange de gaz assure habituellement la protection du bain de fusion, c'est-à-dire du joint de soudage en cours de formation, contre les contaminations atmosphériques durant le soudage.

De manière schématique, un dispositif connu pour réaliser une soudure à l'arc MIG ou MAG comporte des moyens d'alimentation électrique, un circuit de commande et un fil métallique ou électrode fusible, positionné au voisinage, notamment au-dessus, d'une ou plusieurs pièces à souder sur la ou lesquelles une soudure doit être réalisée. Le fil métallique est acheminé jusqu'au dispositif final placé à proximité de la pièce à souder et appelé torche de soudage. Celui-ci comprend en particulier un dispositif appelé tube contact qui est traversé par le fil fusible et qui permet d'assurer une continuité électrique par contact entre le tube et le fil fusible.

Des moyens de mesure sont utilisés afin de déterminer les valeurs du courant (I) circulant dans la (ou les) pièce(s) à souder et de la tension (U) entre une pièce à souder et l'électrode. Ces moyens de mesure permettent également de commander des moyens d'alimentation en courant et/ou le circuit de commande.

L'électrode consommable est un fil fusible au sein duquel passe un courant électrique délivré par les moyens d'alimentation. Le passage du courant est contrôlé par le circuit de commande et permet de chauffer l'extrémité du fil située en regard des pièces ou du bain de soudure. Cette extrémité de fil fond, ce qui provoque alors la formation d'une goutte qui est ensuite déposée sur la ou les pièces au niveau du plan de joint.

Plus précisément, le transfert de métal depuis l'électrode vers le bain de soudure se fait selon un mode de fonctionnement standard connu, appelé transfert par court-circuit. Ce mode de transfert par court-circuit est obtenu pour de faibles énergies d'arc, typiquement pour une intensité de moins de 200 A et une tension de l'ordre de 14 à 20 V, et se caractérise par la formation d'une goutte de métal fondu au bout du fil venant en contact avec le bain de métal liquide. Lors du contact, le courant I augmente rapidement, faisant alors apparaître un pincement ou striction facilitant le détachement de la goutte de métal fondu et son passage vers le bain de soudure. Ce phénomène se répète au fil du temps et donc de la formation du joint de soudure, à des fréquences de l'ordre de 50 à 200 Hz.

Dans les procédés classiques, pour l'amorçage de l'arc, on applique à l'électrode une montée rapide du courant de soudage pour créer l'arc et commencer la fusion du fil. Cette montée de courant provoque de temps en temps l'éclatement d'une certaine longueur de fil résultant en une longueur d'arc instantanément très importante. On bascule en mode de courant pulsé dès la rupture du court-circuit, c'est à dire que l'intensité du courant oscille entre une valeur de base et une valeur de crête. La durée de crête est en général inférieure à la durée de base, de sorte que le courant de soudage présente des pulsations. De cette manière la vitesse de fusion reste importante. La distance entre le fil et les pièces à souder reste importante et il se forme une grosse goutte de métal fondu au bout du fil pouvant entraîner des projections. La fusion peut aussi devenir excessive, avec un risque de perçage du métal de base.

Un but de la présente invention est de pallier tout ou partie des inconvénients de l'art antérieur, en particulier de réduire la période de stabilisation de l'arc lors de l'amorçage de la soudure.

L'invention concerne un procédé d'amorçage d'une opération de soudure à l'arc de pièces métalliques tel que défini dans la revendication 1.

Pendant l'étape A), le fil fusible sort de la torche de soudage avec une certaine vitesse. Il s'approche des pièces à souder. En général, au début de l'étape A), le courant de soudage est nul et le potentiel de soudage prend une certaine valeur qui est la tension à vide entre l'électrode et les pièces à souder. Puis, un court-circuit s'établit. Le potentiel de soudage tombe à zéro et un fort courant de soudage apparaît. Le fil fusible s'échauffe et finit par fondre partiellement. A un moment donné, le court-circuit est rompu et un arc électrique apparaît. Ceci marque la fin de l'étape A).

L'étape B) se caractérise par un courant de soudage de type pulsé, c'est à dire oscillant entre une valeur de base et une valeur de crête. La durée de crête est en général inférieure à la durée de base, de sorte que le courant de soudage présente des pulsations. Selon un mode particulier, les pulsations se produisent à intervalles de temps réguliers. La fréquence des pulsations est en général comprise entre 20 et 400 Hz. D'une pulsation à la suivante, la valeur de crête comme la valeur de base peuvent évoluer à la hausse ou à la baisse, notamment au début de l'étape B), lorsque le mode pulsé n'est pas encore stationnaire. Les pulsations peuvent avoir la forme d'un créneau, ou bien une autre forme, par exemple en triangle ou arrondie. Après un certain nombre de pulsations, un régime stationnaire est normalement atteint, c'est à dire que les pulsations de courant d'enchaînent à l'identique. L'amorçage est alors terminé, ce qui marque la fin de l'étape B).

Dans les procédés de l'art antérieur, on passe directement de l'étape A) à l'étape B), i. e. que si le laps de temps la fin de l'étape A) et le début de la première pulsation de courant à l'étape B) n'excède pas en général une fois la durée caractéristique entre le début de deux pulsations successives de courant durant l'étape B). Cette durée caractéristique correspond à la période du mode pulsé si celui-ci est périodique. A défaut, on définit cette durée caractéristique comme une moyenne sur les dix premières pulsations de courant de l'étape B) du laps de temps entre le début d'une pulsation et le début de la pulsation suivante.

Les inventeurs ont remarqué que, si l'on passe directement de l'étape A) à l'étape B), une quantité très importante d'énergie est apportée au bout du fil. La quantité de fil qui fond par unité de temps est alors élevée et la distance entre le bout du fil et la pièce est maintenue longue, ce qui crée un arc électrique d'une longueur supérieure à ce qui est souhaité et obtenu en régime stationnaire de soudage. Il se forme une grosse goutte de métal fondue au bout du fil qui peut générer des projections. Cet apport d'énergie sans apport de métal peut provoquer une fusion excessive avec perçage du métal de base.

Les inventeurs ont établi qu'on peut résoudre ces problèmes en ajoutant une étape supplémentaire, nommée A2), consistant à retarder le passage au mode pulsé caractéristique de l'étape B). Ce mode pulsé a une périodicité donnée. L'étape A2) a une durée au moins égale à une fois la période du mode pulsé, c'est-à-dire la durée caractéristique entre deux pulsations successives de courant durant l'étape B). Elle est en général d'une durée supérieure à cette durée caractéristique. Selon un mode particulier, l'étape A) a une durée de deux à trois fois cette durée caractéristique.

Durant l'étape A2) le courant de soudage est maintenu à une valeur faible, c'est à dire inférieure au courant de base du mode pulsé au début de l'étape B) et légèrement croissante au cours de l'étape. Néanmoins, ce courant doit être suffisant pour maintenir l'arc électrique apparu à la fin de l'étape A).

Selon des modes de réalisation particuliers, le procédé en question peut en outre comprendre l'une ou plusieurs des caractéristiques suivantes :
- durant l'étape A2), ledit fil sort de ladite torche de soudage avec une vitesse de sortie non-nulle ;
- ledit second niveau donné est compris entre 15 et 25 V ;
- ledit arc électrique maintenu durant l'étape A2) a une longueur comprise entre 2 et 7 mm à la fin de ladite étape A2) ;
- ledit arc électrique maintenu durant l'étape A2) a une longueur comprise entre 4 et 5 mm à la fin de ladite étape A2).

Durant l'étape A2), le fil sort de ladite torche de soudage avec une vitesse non nulle. Elle peut être croissante, mais pas nécessairement. Le fil fusible se rapproche donc de l'électrode et l'arc électrique diminue en longueur. En conséquence, le potentiel de soudage décroît tout au long de l'étape A2), pour atteindre une valeur minimale en fin d'étape.

Cette valeur minimale est en général comprise entre 15 et 25V. Elle est liée à un certain nombre de paramètres tels que les caractéristiques des tôles à souder et du fil fusible utilisé. On peut aussi viser une certaine longueur d'arc à la fin de l'étape A2). Cette longueur souhaitable est en général comprise entre 2 et 7 mm, de préférence entre 4 et 5 mm.

Dans le présent document, l'unité « A » signifie « ampère », « V » « volt », « mm » « millimètre » et « Hz » « hertz ».

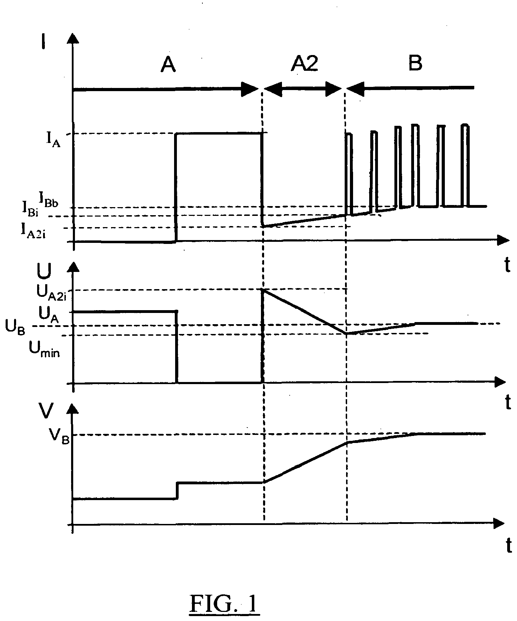

D'autres particularités et avantages de l'invention apparaîtront à la lecture de la description ci-après, faite en référence à la figure 1.

Sur cette figure 1, on a représenté les courbes de courant de soudage (I), de potentiel de soudage (U) et de vitesse de sortie du fil (v).

Dans l'étape A), le fil fusible se rapproche des pièces à souder. Lorsqu'il entre en contact avec elles, un court-circuit s'établit. L'intensité du courant de soudage passe de 0 A à environ 250 A. La tension de soudage tombe de 50-100 V à 0 V. Pendant cette phase, la vitesse V d'approche du fil peut présenter différents profils.

A la fin de l'étape A), le court-circuit se rompt et un arc électrique apparaît entre l'électrode et les pièces à souder. S'ensuit une étape A2) pendant laquelle on maintient cet arc électrique, le courant de soudage étant maintenu à une valeur faible légèrement croissante, de l'ordre de 20 A. Durant cette étape, le fil s'approche à nouveau des pièces à souder, la longueur d'arc diminue et la tension de soudage également. Pour une fréquence de pulsation d'environ 200 Hz, une durée typique pour l'étape A2) est de l'ordre de 50 ms.

Lorsque la tension de soudage a atteint une valeur de l'ordre de 20 V, ou bien que l'arc électrique a une longueur d'environ 5 mm, on passe à l'étape B), ou « mode pulsé ». Elle se caractérise par des pulsations de courant entre un courant de base à environ 20 A et un courant de crête de l'ordre de 250 A, voire plus. Ces pulsations présentent une fréquence généralement comprise entre 20 et 400 Hz. Le début de l'étape B) peut présenter une phase transitoire pendant laquelle le courant de base ou le courant de crête évoluent légèrement avant de prendre une valeur de consigne.

Durant les étapes A), A2) et B), la vitesse d'approche du fil peut présenter différents profils. En particulier, la vitesse peut augmenter durant l'étape A2) et au début de l'étape B).

L'invention ne se limite pas aux modes de réalisation exemplifiés et doit être interprétée de façon non limitative et englobant tout mode de réalisation équivalent tel que défini dans les revendications.

## Revendications

1. Procédé d'amorçage d'une opération de soudure à l'arc de pièces métalliques, mettant en oeuvre une torche de soudage à électrode consommable comprenant un fil fusible traversé par un courant de soudage (I), porté à un certain potentiel de soudage (U) par rapport auxdites pièces métalliques, ledit procédé comprenant les étapes suivantes dans cet ordre :
A) approche dudit fil desdites pièces métalliques jusqu'à la création d'un arc électrique entre ledit fil et lesdites pièces métalliques et la remontée dudit potentiel de soudage (U) à un premier niveau donné (U_{A2i}); et
B) consommation dudit fil, ledit courant de soudage (I) étant de type pulsé à périodicité donnée ;
et ledit procédé comprenant, après l'étape A) et avant l'étape B), une étape A2) de retard au passage en mode pulsé d'une durée supérieure ou égale à au moins une période dudit courant de soudage de type pulsé à l'étape B), **caractérisé en ce que** :
- durant l'étape A2), ledit courant de soudage (I) est maintenu à une valeur faible, c'est-à-dire inférieure au courant de base (I_{Bi}) du mode pulsé au début de l'étape B), faiblement croissante, suffisante pour maintenir ledit arc électrique apparu à la fin de l'étape A), et ledit potentiel de soudage (U) décroît tout au long de ladite étape A2) depuis ledit premier niveau donné (U_{A2i}) jusqu'à un second niveau donné (Uₘᵢₙ),
- à l'étape A), lors de l'établissement du court-circuit, l'intensité passe de 0 à une valeur d'intensité (I_{A}) de court-circuit, ladite valeur d'intensité (I_{A}) de court-circuit étant supérieure à la valeur du courant pendant toute l'étape A2), et
- durant l'étape B), le potentiel de soudage (U) augmente depuis le second niveau donné (Uₘᵢₙ) jusqu'à un troisième niveau (U_{B}) tel que U_{A2i}>U_{B}>Uₘᵢₙ.

2. Procédé selon la revendication 1, **caractérisé en ce que**, durant l'étape A2), ledit fil sort de ladite torche de soudage avec une vitesse de sortie (V) non-nulle.

3. Procédé selon la revendication 2, **caractérisé en ce que** ledit second niveau donné (Uₘᵢₙ) est compris entre 15 et 25 V.

4. Procédé selon l'une quelconque des revendications 1 ou 2, **caractérisé en ce que** ledit arc électrique maintenu durant l'étape A2) a une longueur comprise entre 2 et 7 mm à la fin de ladite étape A2).

5. Procédé selon la revendication 4, **caractérisé en ce que** ledit arc électrique maintenu durant l'étape A2) a une longueur comprise entre 4 et 5 mm à la fin de ladite étape A2).

## Patentansprüche

1. Verfahren zum Einleiten eines Vorgangs zum Lichtbogenschweißen von metallischen Teilen, bei dem ein Schweißbrenner mit Abschmelzelektrode verwendet wird, der einen Schmelzdraht umfasst, der von einem Schweißstrom (I) durchflossen wird, der relativ zu den metallischen Teilen auf ein bestimmtes Schweißpotential gebracht wird, wobei das Verfahren zumindest die folgenden Schritte enthält, die in dieser Reihenfolge ausgeführt werden:
A) Heranführen des Drahtes an die metallischen Teile bis zur Bildung eines Lichtbogens zwischen dem Draht und den metallischen Teilen und Anheben des Schweißpotentials (U) auf eine erste vorgegebene Höhe (U_{A2i}); und
B) Abschmelzen des Drahtes, wobei der Schweißstrom (I) vom Typ Impulsstrom mit vorgegebener Periodizität ist,
und wobei das Verfahren nach dem Schritt A) und vor dem Schritt B) einen Schritt A2) der Verzögerung beim Übergang in einen Impulsmodus mit einer Dauer umfasst, die größer oder gleich einer Periode des Impulsschweißstroms in Schritt B) ist, **dadurch gekennzeichnet, dass**
während des Schritts A2), der Schweißstrom (I) auf einem niedrigen, d.h. gegenüber dem Basisstrom (I_{Bi}) im Pulsmodus am Anfang des Schritts B), oder geringfügig ansteigenden Wert gehalten wird, der ausreicht, um den am Ende von Schritt A) aufgetretenen Lichtbogen zu halten, und das Schweißpotential (U) im gesamten Schritt A2 von der ersten vorgegebenen Höhe (U_{A2i}) auf eine zweite vorgegebene Höhe (Uₘᵢₙ) abfällt,
in Schritt A), bei der Bildung des Kurzschlusses, die Stromstärke von 0 auf einen Kurzschluss-Stromstärkewert (I_{A}) übergeht, wobei der Wert der Kurzschluss-Stromstärke größer als der Wert des Stromes während des ganzen Schrittes A2) ist, und
während des Schrittes B), das Schweißpotential (U) von der zweiten vorgegebenen Höhe (Uₘᵢₙ) auf eine dritte Höhe (U_{B}) ansteigt, so dass U_{A2i}>U_{B}>Uₘᵢₙ.

2. Verfahren nach Anspruch 1, **dadurch gekennzeichnet, dass**, während des Schrittes A2), der Draht aus dem Schweißbrenner mit einer Austrittsgeschwindigkeit (V) von ungleich Null austritt.

3. Verfahren nach Anspruch 2, **dadurch gekennzeichnet, dass** die zweite vorgegebene Höhe (Uₘᵢₙ) zwischen 15 und 25 V beträgt.

4. Verfahren nach einem der Ansprüche 1 oder 2, **dadurch gekennzeichnet, dass** der Lichtbogen, der während des Schrittes A2) gehalten wird, am Ende von Schritt A2) eine Länge zwischen 2 und 7 mm hat.

5. Verfahren nach Anspruch 4, **dadurch gekennzeichnet, dass** der Lichtbogen, der während des Schrittes A2) gehalten wird, am Ende von Schritt A2) eine Länge zwischen 4 und 5 mm hat.

## Claims

1. Process for initiating an operation for arc welding of metal parts, using a consumable electrode welding torch comprising a fusible wire carrying a welding current (I) which is raised to a certain welding potential (U) relative to said metal parts, said process comprising the following steps in this order:
A) bringing said wire close to said metal parts until an electric arc is created between said wire and said metal parts, and raising said welding potential (U) back up to a first given level (U_{A2i}); and
B) consuming said wire, said welding current (I) being of the type which is pulsed at a given periodicity;
and said process comprising, after step A) and before step B), a step A2) of delaying transition into a pulsed mode by a duration greater than or equal to at least one period of said welding current of the pulsed type of step B), **characterised in that**:
- during step A2), said welding current (I) is kept at a low, i.e. inferior to the base current (I_{Bi}) in pulse mode at the beginning of step B), or slowly increasing value which is sufficient for maintaining said electric arc created at the end of step A), and said welding potential (U) decreases from said first given level (U_{A2i}) to a second given level (Uₘᵢₙ) during step A2,
- in step A), when the short circuit is established, the intensity of the current transitions from 0 to a short circuit intensity value (I_{A}), said short circuit intensity value (I_{A}) being greater than the value of the current throughout step A2), and during step B), the welding potential (U) increases from the second given level (Uₘᵢₙ) to a third level (U_{B}) such that U_{A2i}>U_{B}>Uₘᵢₙ.

2. Process according to claim 1, **characterised in that**, during step A2), said wire exits the welding torch at a non-zero exit speed (V).

3. Process according to claim 2, **characterised in that** said second given level (Uₘᵢₙ) is between 15 and 25 V.

4. Process according to either claim 1 or claim 2, **characterised in that** said electric arc maintained during step A2) has a length of between 2 and 7 mm at the end of said step A2).

5. Process according to claim 4, **characterised in that** said electric arc maintained during step A2) has a length of between 4 and 5 mm at the end of said step A2).
